# EUROPEAN PATENT APPLICATION

(11) **EP 4 485 390 A1**
(43) Date of publication of application: **01.01.2025**
(21) Application number: 22926881.8
(22) Date of filing: 19.12.2022
(51) Int. Cl.: G06V 20/56, G06V 10/22, G06V 10/24, G06V 10/26, G06V 10/44, G06V 10/764

(54) **IMAGE DETECTION METHOD AND APPARATUS**

(30) Priority: 21.02.2022 CN 202210158788
(71) Applicant: Jingdong Kunpeng (Jiangsu) Technology Co., Ltd., Changshu, Jiangsu 215500 (CN)
(72) Inventor: LIU, Hao, Changshu, Jiangsu 215500 (CN); ZHANG, Baofeng, Changshu, Jiangsu 215500 (CN)
(74) Representative: FDST Patentanwälte
(86) International application number: PCT/CN2022/139874
(87) International publication number: WO 2023/155581

(57) **Abstract**

The disclosure, which provides an image detection method and apparatus, relates to the technical field of computer vision. A specific implementation scheme of the method comprises: performing instance segmentation on an image to be detected using an image instance segmentation model so as to obtain respective instances in the image to be detected; calculating preliminary centers of the respective instances based on point cloud data and the respective instances; correcting the preliminary centers of the respective instances using an instance center correction model so as to obtain corrected centers of the respective instances; and inputting the corrected centers of the respective instances into a target detection model so as to output frames and categories of the respective instances. The implementation scheme can solve a technical problem of a comparatively poor image detection performance.

## Description

### Cross Reference to Related Applications

The application claims priority to CN Patent Application No. 202210158788.3, entitled "Image Detection Method and Apparatus", which was filed on February 21, 2022, and the contents of which are hereby incorporated by reference in its entirety to serve as part or all of the application.

### Technical Field

The disclosure relates to the technical field of computer vision, and in particular relates to an image detection method and apparatus.

### Background

Autonomous driving vehicles are generally equipped with multiple types of sensors for detecting obstacles, such as lidar, RGB image cameras, millimeter wave radar, and so on. However, due to different imaging principles and installation angles of different sensors, output results obtained are also different. For example, multi-line lidar installed on a top outputs a 360-degree point cloud, and an image sensor consists of several RGB cameras, each of which has a fixed field of view and is responsible for generating an RGB image of a corresponding part of area. Since these sensors generate different data modalities, data characteristics generated thereby are also different. For example, the lidar is not sensitive to light intensity and may be used at night, but due to the comparatively high cost of the lidar, mass-produced autonomous driving vehicles generally cannot use high-wire harness products, so point cloud data obtained is comparatively sparse, which results in a combatively low resolution; whereas the RGB image camera has a low cost, a high resolution, and apparent texture features, but it is easily affected by weather changes and ambient light intensity.

From the aspect of algorithms, the data corresponding to each modality is generally detected using a dedicated algorithm to obtain a detection result, and then the detection results of the respective models are fused together, which is generally referred to as the post-fusion method in the industry. The method corresponding thereto is called the pre-fusion method, which uses a deep model or algorithm to process all the data of different modalities at once to directly obtain the final detection result. For example, an AVOD algorithm uses a deep neural network to extract features from data of different modalities to obtain feature maps, and then performs fusion at a level of feature maps. Due to the differences in data of different modalities, it is difficult to align the feature maps from different modalities, such as two feature maps, one of which is from a 360-degree point cloud and the other one of which corresponds to a front-view camera. However, both the post-fusion method and the pre-fusion method have poor fusion effects, which results in a comparatively poor image detection performance.

### Summary of the invention

In view of this, the embodiments of the invention provide an image detection method and apparatus to solve the technical problem of a comparatively poor image detection performance.

In order to achieve the aforesaid object, according to one aspect of the embodiments of the disclosure, an image detection method is provided, the method comprising:
performing instance segmentation on an image to be detected using an image instance segmentation model so as to obtain respective instances in the image to be detected;
calculating preliminary centers of the respective instances based on point cloud data and the respective instances;
correcting the preliminary centers of the respective instances using an instance center correction model so as to obtain corrected centers of the respective instances; and
inputting the corrected centers of the respective instances into a target detection model so as to output frames and categories of the respective instances.

According to one or more embodiments of the disclosure, calculating preliminary centers of the respective instances based on point cloud data and the respective instances comprises:
projecting the point cloud data to the respective instances;
merging the point cloud data of the same instance appearing in different images to be detected in accordance with the point cloud data of the overlapping parts in the respective instances;
calculating the point cloud data of the main bodies of the respective instances using a clustering algorithm; and
calculating the preliminary centers of the respective instances based on the point cloud data of the main bodies of the respective instances.

According to one or more embodiments of the disclosure, calculating the point cloud data of the main bodies of the respective instances using a clustering algorithm comprises:
calculating the point cloud data of the main bodies of the respective instances using a spatial clustering algorithm, and removing the point cloud data outside the main bodies of the respective instances.

According to one or more embodiments of the disclosure, before performing instance segmentation on an image to be detected using an image instance segmentation model so as to obtain respective instances in the image to be detected, the method further comprises:
acquiring sample images at various angles, marking positions, categories and outlines of respective sample instances on the sample images at various angles, and obtaining the image instance segmentation model by training using a first model;
calculating the preliminary centers of the respective sample instances, marking the frames of the respective sample instances in sample point cloud data, and obtaining the instance center correction model by training using a second model; and
obtaining the target detection model by training using a third model.

According to one or more embodiments of the disclosure, obtaining the image instance segmentation model by training using a first model comprises:
inputting the sample images at various angles and the positions, categories and outlines of the respective sample instances thereof into the first model for training, thereby obtaining the image instance segmentation model by training;
wherein the first model is Mask R-CNN, Hybrid Task Cascade or BlendMaskd.

According to one or more embodiments of the disclosure, calculating the preliminary centers of the respective sample instances, marking the frames of the respective sample instances in sample point cloud data, and obtaining the instance center correction model by training using a second model comprises:
calculating the preliminary centers of the respective sample instances based on the sample point cloud data and the respective sample instances;
marking the frames of the respective sample instances in the sample point cloud data, and calculating the centers of the frames of the respective sample instances; and
inputting the preliminary centers of the respective sample instances and the centers of the frames of the respective sample instances into the second model for training, thereby obtaining the instance center correction model by training.

According to one or more embodiments of the disclosure, calculating the preliminary centers of the respective sample instances based on the sample point cloud data and the respective sample instances comprises:
projecting the sample point cloud data to the respective sample instances;
merging the point cloud data of the same sample instance appearing in different sample images in accordance with the point cloud data of the overlapping parts in the respective sample instances;
calculating the point cloud data of the main bodies of the respective sample instances using a clustering algorithm; and
calculating the preliminary centers of the respective sample instances based on the point cloud data of the main bodies of the respective sample instances.

According to one or more embodiments of the disclosure, the second model is PointNet, PointNet++, Cylider3D or Rand-LA.

According to one or more embodiments of the disclosure, obtaining the target detection model by training using a third model comprises:
inputting attribute data of respective point clouds of the respective sample instances and the frames of the respective sample instances into the third model for training, thereby obtaining the target detection model by training;
wherein the attribute data of each point cloud includes three-dimensional coordinates, a category and center coordinates of the frame to which the point cloud belongs.

According to one or more embodiments of the disclosure, the third model is PointPillars, VoxelNet, Sparsely Embedded Convolutional Detection or CenterPoint.

In addition, according to another aspect of the embodiments of the disclosure, provided is an image detection apparatus, comprising:
a segmentation module for performing instance segmentation on an image to be detected using an image instance segmentation model so as to obtain respective instances in the image to be detected;
a calculation module for calculating preliminary centers of the respective instances based on point cloud data and the respective instances;
a correction module for correcting the preliminary centers of the respective instances using an instance center correction model so as to obtain corrected centers of the respective instances; and
a detection module for inputting the corrected centers of the respective instances into a target detection model so as to output frames and categories of the respective instances.

According to one or more embodiments of the disclosure, the calculation module is further used for:
projecting the point cloud data to the respective instances;
merging the point cloud data of the same instance appearing in different images to be detected in accordance with the point cloud data of the overlapping parts in the respective instances;
calculating the point cloud data of the main bodies of the respective instances using a clustering algorithm; and
calculating the preliminary centers of the respective instances based on the point cloud data of the main bodies of the respective instances.

According to one or more embodiments of the disclosure, the calculation module is further used for:
calculating the point cloud data of the main bodies of the respective instances using a spatial clustering algorithm, and removing the point cloud data outside the main bodies of the respective instances.

According to one or more embodiments of the disclosure, there is further a training module used for:
acquiring sample images at various angles, marking positions, categories and outlines of respective sample instances on the sample images at various angles, and obtaining the image instance segmentation model by training using a first model;
calculating the preliminary centers of the respective sample instances, marking the frames of the respective sample instances in sample point cloud data, and
obtaining the instance center correction model by training using a second model; and
obtaining the target detection model by training using a third model.

According to one or more embodiments of the disclosure, the training module is further used for:
inputting the sample images at various angles and the positions, categories and outlines of the respective sample instances thereof into the first model for training, thereby obtaining the image instance segmentation model by training;
wherein the first model is Mask R-CNN, Hybrid Task Cascade or BlendMaskd.

According to one or more embodiments of the disclosure, the training module is further used for:
calculating the preliminary centers of the respective sample instances based on the sample point cloud data and the respective sample instances;
marking the frames of the respective sample instances in the sample point cloud data, and calculating the centers of the frames of the respective sample instances; and
inputting the preliminary centers of the respective sample instances and the centers of the frames of the respective sample instances into the second model for training, thereby obtaining the instance center correction model by training.

According to one or more embodiments of the disclosure, the training module is further used for:
projecting the sample point cloud data to the respective sample instances;
merging the point cloud data of the same sample instance appearing in different sample images in accordance with the point cloud data of the overlapping parts in the respective sample instances;
calculating the point cloud data of the main bodies of the respective sample instances using a clustering algorithm; and
calculating the preliminary centers of the respective sample instances based on the point cloud data of the main bodies of the respective sample instances.

According to one or more embodiments of the disclosure, the second model is PointNet, PointNet++, Cylider3D or Rand-LA.

According to one or more embodiments of the disclosure, the training module is further used for:
inputting attribute data of respective point clouds of the respective sample instances and the frames of the respective sample instances into the third model for training, thereby obtaining the target detection model by training;
wherein the attribute data of each point cloud includes three-dimensional coordinates, a category and center coordinates of the frame to which the point cloud belongs.

According to one or more embodiments of the disclosure, the third model is PointPillars, VoxelNet, Sparsely Embedded Convolutional Detection or CenterPoint.

According to a further aspect of the embodiments of the disclosure, also provided is an electronic device, comprising:
one or more processors;
a storage means for storing one or more programs,
the one or more programs, when executed by the one or more processors,
causing the one or more processors to implement the method according to any of the aforesaid embodiments.

According to a still further aspect of the embodiments of the disclosure, also provided is a computer-readable medium, on which a computer program is stored, the program, when executed by a processor, implementing the method according to any of the aforesaid embodiments.

One of the embodiments disclosed above has the following advantages or beneficial effects: because of the technical means of performing instance segmentation on an image to be detected using an image instance segmentation model, and correcting the preliminary centers of the respective instances using an instance center correction model to thereby input the corrected centers of the respective instances into a target detection model, the technical problem of a comparatively poor image detection performance in the prior art is overcome. The embodiment of the disclosure uses the instance segmentation result of the image to mark each point in the point cloud at a level of instances, further corrects the center of each instance, and then performs a target detection using a point cloud detection algorithm, and since the instance information of the point cloud is obtained before the point cloud is sent to the point cloud detection algorithm, the learning difficulty of the detection algorithm is greatly reduced, and the detection performance is greatly improved.

Further effects of the aforesaid non-conventional optional manners will be described below in combination with specific implementation schemes.

### Brief Description of the Drawings

Figures are used for better understanding of the disclosure, and do not form improper limitations of the disclosure. Wherein:
FIG. 1 is a schematic diagram of a main flow of an image detection method according to an embodiment of the disclosure;
FIG. 2 is a schematic diagram of a main flow of an image detection method according to a referable embodiment of the disclosure;
FIG. 3 is a schematic diagram of main modules of an image detection apparatus according to an embodiment of the disclosure;
FIG. 4 is an exemplary diagram of a system architecture to which an embodiment of the disclosure can be applied; and
FIG. 5 is a schematic diagram of a structure of a computer system suitable for implementing a terminal device or a server according to an embodiment of the disclosure.

### Detailed Description

The exemplary embodiments of the disclosure, including various details of the embodiments of the disclosure, are described below in combination with the figures to facilitate understanding, and shall be considered to be exemplary ones only. Thus, those skilled in the art should recognize that various changes and modifications may be made to the embodiments described herein without departing from the scope and spirit of the disclosure. Similarly, for clarity and conciseness, descriptions of well-known functions and structures are omitted in the descriptions below.

The embodiment of the disclosure uses the instance segmentation result of the image to mark each point in the point cloud at a level of instances, and after a first stage of instance segmentation, each point cloud data has a category label, such as car, pedestrian, bicycle, and so on, and different instances of the same category may also be identified by means of the first stage of instance segmentation, such as 10 cars, 20 pedestrians, and so on. The instance segmentation can distinguish these instances of the same category, such as car 1, car 2, car 3, and so on, as well as pedestrian 1, pedestrian 2, pedestrian 3, and so on.

After the embodiment of the disclosure projects the point cloud data to the result of the instance segmentation model, the image instance segmentation model is further used to obtain independent information of each instance. For example, an instance center corresponding to each point cloud data is calculated and corrected, so the use of such information in input data in a second stage may further reduce the learning difficulty of the algorithm, thereby increasing the accuracy of the image detection. Thus, the embodiment of the disclosure makes full use of the information in the image, and reduces the difficulty of a second stage of point cloud detection, thereby improving the detection performance.

The embodiment of the disclosure breaks the absolute "barrier" between the post-fusion and the pre-fusion, smartly uses the result of the image instance segmentation, then projects the original point cloud data to the result of the image instance segmentation in accordance with a calibration relationship between the point cloud and the camera, so that each point cloud data obtains an entity category, such as car, pedestrian, bicycle, and so on, then calculates the center of each instance in the radar coordinate system, and then uses the traditional point cloud detection algorithm to perform a target detection. Since the instance information of the point cloud is obtained before the point cloud is sent to the point cloud detection algorithm, the learning difficulty of the detection algorithm is greatly reduced, and the detection performance is greatly improved. The image detection method provided by the embodiment of the disclosure is different from the post-fusion method in that it does not fuse the detection results of the two modalities, and is also different from the pre-fusion method in that it does not directly process the data of the two modalities at the same time, but processes the data sequentially. Just because the data of the two modalities has a relation of continue sequentially, so, the image detection method provided by the embodiment of the disclosure can be regarded as a two-stage detection method of an image-point cloud.

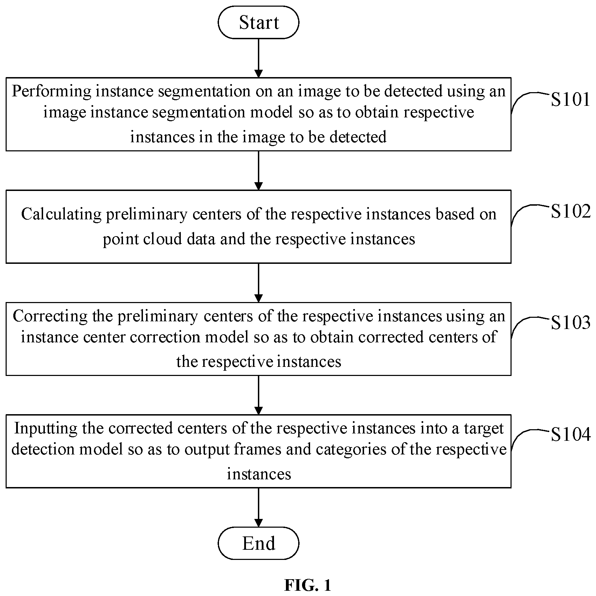

FIG. 1 is a schematic diagram of a main flow of an image detection method according to an embodiment of the disclosure. As shown in FIG. 1, the image detection method may comprise:
Step 101: performing instance segmentation on an image to be detected using an image instance segmentation model so as to obtain respective instances in the image to be detected.

In an inference stage, it is required to obtain a frame of point cloud data and at least one RGB image corresponding thereto (that is, the image to be detected, which may be captured by RGB cameras installed at different angles). It should be pointed out that there may be one or more images to be detected, which is determined by the number of the RGB cameras. If a plurality of cameras are installed at different angles, each camera captures one image to be detected, and the instance segmentation is performed on each of the plurality of images to be detected, respectively; if only one camera is installed, the instance segmentation is performed on the one image captured by this camera.

In the embodiment of the disclosure, the image instance segmentation model is first used to perform instance segmentation on the images to be detected at various angles so as to obtain respective instances in each of the images to be detected, respectively. The image instance segmentation model identifies to which instance each pixel belongs. For example, the image instance segmentation model identifies which pixels belong to the first car and which pixels belong to the second car.

In order to obtain comparatively good instance segmentation results, it is required to pre-train the image instance segmentation model. Optionally, before the step 101, the method may also comprise: acquiring sample images at various angles, marking positions, categories and outlines of respective sample instances on the sample images at various angles, and obtaining the image instance segmentation model by training using a first model; calculating the preliminary centers of the respective sample instances, marking the frames of the respective sample instances in sample point cloud data, and obtaining the instance center correction model by training using a second model; and obtaining the target detection model by training using a third model. The sample images at various angles are first captured by the RGB cameras installed at various angles, the label of the instance to which each pixel in the sample image belongs is marked, and the image instance segmentation model is obtained by training based on the marking results; then the preliminary centers of the respective sample instances are calculated, and meanwhile the frames of the respective sample instances marked in the sample point cloud data are taken into consideration to obtain an instance center correction module by training; finally, the target detection model is obtained by training. In the embodiment of the disclosure, it is required to pre-train the image instance segmentation model, the instance center correction model, and the target detection model, so that the target detection may be accurately performed in subsequent detection steps.

Optionally, the image instance segmentation model is obtained by training using a first model, the above step comprising: inputting the sample images at various angles and the positions, categories and outlines of the respective sample instances thereof into the first model for training, thereby obtaining the image instance segmentation model by training. The sample images at various angles are first captured by the RGB cameras installed at various angles, then the label of the instance to which each pixel in the sample image belongs is marked, then the sample images at various angles and the marking results thereof are input into the first model for training, and the image instance segmentation model is obtained by iterative training. Optionally, the first model is Mask R-CNN, Hybrid Task Cascade or BlendMaskd, and training the sample image at each angle by these modules may achieve comparatively good training results.

Optionally, the step for calculating the preliminary centers of the respective sample instances, marking the frames of the respective sample instances in sample point cloud data, and obtaining the instance center correction model by training using a second model may comprise: calculating the preliminary centers of the respective sample instances based on the sample point cloud data and the respective sample instances; marking the frames of the respective sample instances in the sample point cloud data, and calculating the centers of the frames of the respective sample instances; and inputting the preliminary centers of the respective sample instances and the centers of the frames of the respective sample instances into the second model for training, thereby obtaining the instance center correction model by training. In order to make full use of the image information obtained in the step 101 for point cloud detection in subsequent steps, it is also required to pre-train the instance center correction model. When the instance center correction model is trained, the preliminary centers of the respective sample instances are used as input data, and the centers of the frames of the respective sample instances in the data are marked as the regression target. These two parts of data are sent to the second model for training, and the instance center correction module is obtained by iterative training, the instance center correction module is used to correct the instance center, so that the learning difficulty of the detection algorithm is greatly reduced, and the detection performance is greatly improved.

Specifically, the entire point cloud data are projected to the corresponding RGB images, respectively, the results of the image instance segmentation are taken into consideration to obtain the point cloud instances, then the preliminary centers [c1, c2, c3] of the respective instances are calculated, and meanwhile the frames of the respective sample instances are marked in the sample point cloud data, so as to calculate the centers of the frames of the respective sample instances. The format of the point cloud data input into the second model is [x, y, z, r, c1, c2, c3], the corresponding true values are [x, y, z, r, c1 *, c2', c3'], and the format of the frame centers of the respective sample instances input into the second model is [x, y, z, r, c1', c2', c3'], which serves as the regression target, where x, y and z are three-dimensional coordinates, r is reflectivity, and [c1', c2', c3'] are the marked frame centers of the sample instances.

Optionally, the step for calculating the preliminary centers of the respective sample instances based on the sample point cloud data and the respective sample instances comprises: projecting the sample point cloud data to the respective sample instances; merging the point cloud data of the same sample instance appearing in different sample images in accordance with the point cloud data of the overlapping parts in the respective sample instances; calculating the point cloud data of the main bodies of the respective sample instances using a clustering algorithm; and calculating the preliminary centers of the respective sample instances based on the point cloud data of the main bodies of the respective sample instances.

Firstly, the sample point cloud data are projected to the respective sample instances, then the point cloud data of the overlapping parts are merged into the point cloud data corresponding to the same sample instance in accordance with the point cloud data of the overlapping parts in the respective sample instances, then the point cloud data of the main bodies of the respective sample instances are calculated using the clustering algorithm, and finally the preliminary centers of the respective sample instances are calculated. It should be pointed out that since a plurality of sample images at different angles may appear in the same sample instance, the point clouds of the overlapping parts will exist in the plurality of sample images at different angles, and it is required to first merge the point cloud data of the overlapping parts into the point cloud data corresponding to the same sample instance, and then calculate the preliminary centers of the respective sample instances.

Optionally, after the point cloud data of the main bodies of the respective sample instances are calculated using the clustering algorithm, it is further required to remove the ground point cloud data to prevent the ground point cloud data from affecting clustering of the point cloud data of the main bodies.

Optionally, the step for calculating the point cloud data of the main bodies of the respective sample instances using a clustering algorithm comprises: calculating the point cloud data of the main bodies of the respective sample instances using a spatial clustering algorithm, and removing the point cloud data outside the main bodies of the respective instances. The point cloud data may be clustered by the clustering algorithm, and each cluster represents one sample instance, so that it possible to accurately find out the main bodies of the respective sample instances, and remove the point cloud data outside the main bodies of the respective instances.

Optionally, the clustering algorithm may be DBSCAN, FN-DBSCAN, landmark FN-DBSCAN or OPTICS, and so on, and these clustering algorithms may accurately find out the main bodies of the respective sample instances.

Optionally, the second model is PointNet, PointNet++, Cylider3D or Rand-LA, and these models may be used to train the instance center correction model to thereby accurately correct the instance centers, so that the learning difficulty of the point cloud detection algorithm is greatly reduced, and the point cloud detection performance is greatly improved.

It should be pointed out that accurately calculating the centers of the respective sample instances may further reduce the learning difficulty of the point cloud detection algorithm, but due to the accuracy of the lidar-camera calibration and the problem of the inter-frame synchronization time difference of different sensors, the results from the point cloud to image generally have certain deviations, and these factors will finally lead to inaccurate projection results, especially at the edges of the instance segmentation. Thus, the embodiment of the disclosure uses a series of projection point cloud post-processing and model correction methods so as to obtain comparatively good instance centers.

Optionally, the step for obtaining the target detection model by training using a third model may comprise: inputting attribute data of respective point clouds of the respective sample instances and the frames of the respective sample instances into the third model for training, thereby obtaining the target detection model by training; wherein the attribute data of each point cloud includes three-dimensional coordinates, a category and center coordinates of the frame to which the point cloud belongs. In the process of training the target detection model, it is required to input the attribute data of the respective dimensions of each point cloud into the third model. For example, the format of the point cloud input into the third model is [x, y, z, r, cls, c1', c2', c3'], where x, y and z are three-dimensional coordinates, r is reflectivity, cls is a category corresponding to the image instance segmentation, and c1', c2' and c3' are center coordinates of the frame to which the point cloud belongs.

Optionally, the third model is PointPillars, VoxelNet, Sparsely Embedded Convolutional Detection or CenterPoint, and the target detection model obtained by using these models for training may increase the accuracy of the image detection.

Step 102: calculating preliminary centers of the respective instances based on point cloud data and the respective instances.

In the step, the entire point cloud data captured by lidar are projected to the respective instances, so as to calculate the preliminary centers [c1, c2, c3] of the respective instances. It should be pointed out that the embodiment of the disclosure calculates the preliminary centers of the respective instances in the radar coordinate system, and may also calculate the preliminary centers in the image coordinate system as long as it is ensured that the training stage and the inference stage are in the same coordinate system, the coordinate system being not limited in the embodiment of the disclosure.

Optionally, the step 102 may comprise: projecting the point cloud data to the respective instances; merging the point cloud data of the same instance appearing in different images to be detected in accordance with the point cloud data of the overlapping parts in the respective instances; calculating the point cloud data of the main bodies of the respective instances using a clustering algorithm; and calculating the preliminary centers of the respective instances based on the point cloud data of the main bodies of the respective instances. Similar to the case in the training stage, the entire point cloud data are first projected to the respective instances, then the point cloud data of the overlapping parts are merged into the point cloud data corresponding to the same sample instance in accordance with the point cloud data of the overlapping parts in the respective instances, then the point cloud data of the main bodies of the respective instances are calculated using the clustering algorithm, and finally the preliminary centers of the respective instances are calculated. It should be pointed out that since a plurality of images at different angles may appear in the same instance, the point clouds of the overlapping parts will exist in the plurality of images at different angles, and it is required to first merge the point cloud data of the overlapping parts into the point cloud data corresponding to the same instance, and then calculate the preliminary centers of the respective instances.

Optionally, after the point cloud data of the main bodies of the respective instances are calculated using the clustering algorithm, it is further required to remove the ground point cloud data to prevent the ground point cloud data from affecting clustering of the point cloud data of the main bodies. Optionally, the step for calculating the point cloud data of the main bodies of the respective instances using a clustering algorithm comprises: calculating the point cloud data of the main bodies of the respective instances using a spatial clustering algorithm, and removing the point cloud data outside the main bodies of the respective instances.

Optionally, the clustering algorithm may be DBSCAN, FN-DBSCAN, landmark FN-DBSCAN or OPTICS, and so on, and these clustering algorithms may accurately find out the main bodies of the respective instances.

Step 103: correcting the preliminary centers of the respective instances using an instance center correction model so as to obtain corrected centers of the respective instances.

After the preliminary centers [c1, c2, c3] of the respective instances are calculated, the instance center correction module is used to correct the preliminary centers of the respective instances. The output of the instance center correction module is [x, y, z, r, c1', c2', c3'], where [c1', c2', c3'] are the corrected instance centers.

Step 104: inputting the corrected centers of the respective instances into a target detection model so as to output frames and categories of the respective instances.

All the points in the entire point cloud data are input into the target detection model with [x, y, z, r, c1', c2', c3'] as the format of each point, and the target detection model outputs the frames and categories of the respective instances, that is, the frames and categories of the detected objects.

It may be seen according to the various embodiments described above that the embodiment of the disclosure overcomes the technical problem of a comparatively poor image detection performance in the prior art by the technical means of performing instance segmentation on an image to be detected using an image instance segmentation model, and correcting the preliminary centers of the respective instances using an instance center correction model to thereby input the corrected centers of the respective instances into a target detection model. The embodiment of the disclosure uses the instance segmentation result of the image to mark each point in the point cloud at a level of instances, further corrects the center of each instance, and then performs a target detection using a point cloud detection algorithm, and since the instance information of the point cloud is obtained before the point cloud is sent to the point cloud detection algorithm, the learning difficulty of the detection algorithm is greatly reduced, and the detection performance is greatly improved.

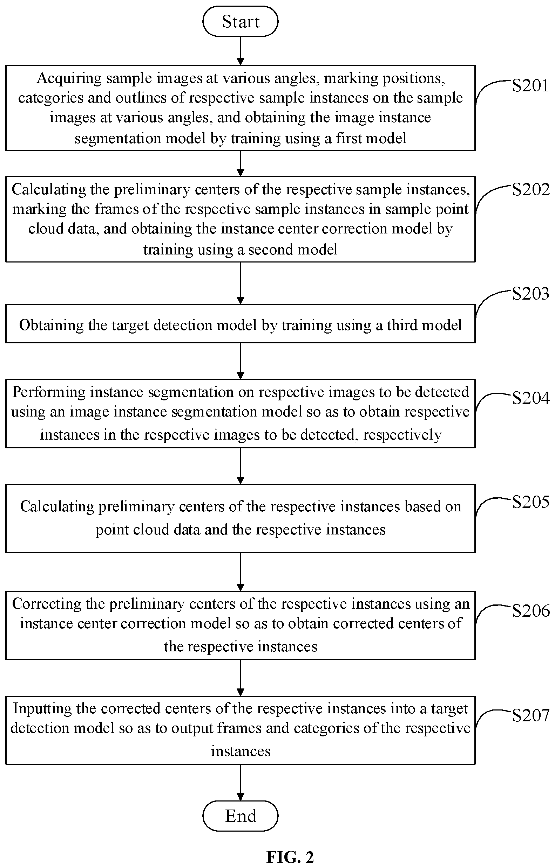

FIG. 2 is a schematic diagram of a main flow of an image detection method according to a referable embodiment of the disclosure. As a further embodiment of the disclosure, as shown in FIG. 2, the image detection method may comprise: Step 201: acquiring sample images at various angles, marking positions, categories and outlines of respective sample instances on the sample images at various angles, and obtaining the image instance segmentation model by training using a first model.

Multiple frames of sample point cloud data and RGB images corresponding to each frame of sample point cloud data may be acquired, and each frame of sample point cloud data may correspond to a plurality of RGB images (that is, sample images, which may be captured by RGB cameras installed at different angles).

Specifically, the label of the instance to which each pixel in the sample image belongs is marked, and the image instance segmentation model is obtained by training based on the marking results. Optionally, the step of the image instance segmentation model is obtained by training using a first model comprising: inputting the sample images at various angles and the positions, categories and outlines of the respective sample instances thereof into the first model for training, thereby obtaining the image instance segmentation model by training. The sample images at various angles are first captured by the RGB cameras installed at various angles, then the label of the instance to which each pixel in the sample image belongs is marked, then the sample images at various angles and the marking results thereof are input into the first model for training, and the image instance segmentation model is obtained by iterative training. Optionally, the first model is Mask R-CNN, Hybrid Task Cascade or BlendMaskd, and training the sample image at each angle by these modules may achieve comparatively good training results.

Step 202: calculating the preliminary centers of the respective sample instances, marking the frames of the respective sample instances in sample point cloud data, and obtaining the instance center correction model by training using a second model.

The preliminary centers of the respective sample instances are calculated, and meanwhile the frames of the respective sample instances marked in the sample point cloud data are taken into consideration to obtain an instance center correction module by training. When the instance center correction model is trained, the preliminary centers of the respective sample instances are used as input data, and the centers of the frames of the respective sample instances in the data are marked as the regression target. These two parts of data are sent to the second model for training, and the instance center correction module is obtained by iterative training, the instance center correction module is used to correct the instance center, so that the learning difficulty of the detection algorithm is greatly reduced, and the detection performance is greatly improved. The format of the point cloud data input into the second model is [x, y, z, r, c1, c2, c3], and the format of the frame centers of the respective sample instances input into the second model is [x, y, z, r, c1', c2', c3'], which serves as the regression target, where x, y and z are three-dimensional coordinates, r is reflectivity, and [c1', c2', c3'] are the marked frame centers of the sample instances.

Step 203: obtaining the target detection model by training using a third model.

Specifically, the attribute data of the respective point clouds of the respective sample instances and the frames of the respective sample instances are input into the third model for training, so as to obtain the target detection model by training; wherein the attribute data of each point cloud includes three-dimensional coordinates, a category and center coordinates of the frame to which the point cloud belongs. In the process of training the target detection model, it is required to input the attribute data of the respective dimensions of each point cloud into the third model. For example, the format of the point cloud input into the third model is [x, y, z, r, cls, c1', c2', c3'], wherein x, y and z are three-dimensional coordinates, r is reflectivity, cls is a category corresponding to the image instance segmentation, and c1', c2' and c3' are center coordinates of the frame to which the point cloud belongs.

Step 204: performing instance segmentation on respective images to be detected using an image instance segmentation model so as to obtain respective instances in the respective images to be detected, respectively.

In the inference stage, it is required to obtain a frame of point cloud data and at least one RGB image corresponding thereto (that is, the image to be detected, which may be captured by RGB cameras installed at different angles).

Step 205: calculating preliminary centers of the respective instances based on point cloud data and the respective instances.

The entire point cloud data captured by lidar are projected to the respective instances, so as to calculate the preliminary centers [c1, c2, c3] of the respective instances. Specifically, the point cloud data are projected to the respective instances; the point cloud data of the same instance appearing in different images to be detected are merged in accordance with the point cloud data of the overlapping parts in the respective instances; the point cloud data of the main bodies of the respective instances are calculated using a clustering algorithm; and the preliminary centers of the respective instances are calculated based on the point cloud data of the main bodies of the respective instances. Similar to the case in the training stage, the entire point cloud data are first projected to the respective instances, then the point cloud data of the overlapping parts are merged into the point cloud data corresponding to the same sample instance in accordance with the point cloud data of the overlapping parts in the respective instances, then the point cloud data of the main bodies of the respective instances are calculated using the clustering algorithm, and finally the preliminary centers of the respective instances are calculated. It should be pointed out that since a plurality of images at different angles may appear in the same instance, the point clouds of the overlapping parts will exist in the plurality of images at different angles, and it is required to first merge the point cloud data of the overlapping parts into the point cloud data corresponding to the same instance, and then calculate the preliminary centers of the respective instances. Optionally, after the point cloud data of the main bodies of the respective instances are calculated using the clustering algorithm, it is further required to remove the ground point cloud data to prevent the ground point cloud data from affecting clustering of the point cloud data of the main bodies. Optionally, the step for calculating the point cloud data of the main bodies of the respective instances using a clustering algorithm comprises: calculating the point cloud data of the main bodies of the respective instances using a spatial clustering algorithm, and removing the point cloud data outside the main bodies of the respective instances. Optionally, the clustering algorithm may be DBSCAN, FN-DBSCAN, landmark FN-DBSCAN or OPTICS, and so on, and these clustering algorithms may accurately find out the main bodies of the respective instances.

Step 206: correcting the preliminary centers of the respective instances using an instance center correction model so as to obtain corrected centers of the respective instances.

After the preliminary centers [c1, c2, c3] of the respective instances are calculated, the instance center correction module is used to correct the preliminary centers of the respective instances. The output of the instance center correction module is [x, y, z, r, c1', c2', c3'], where [c1', c2', c3'] are the corrected instance centers.

Step 207: inputting the corrected centers of the respective instances into a target detection model so as to output frames and categories of the respective instances.

All the points in the entire point cloud data are input into the target detection model with [x, y, z, r, c1', c2', c3'] as the format of each point, and the target detection model outputs the frames and categories of the respective instances, that is, the frames and categories of the detected objects.

In the embodiment, the steps 201-203 are the training stage, and the steps 204-207 are the inference stage.

In addition, the specific implementation contents of the image detection method in a referable embodiment of the disclosure have been described in detail in the image detection method described above, so the repeated contents will not be described again herein.

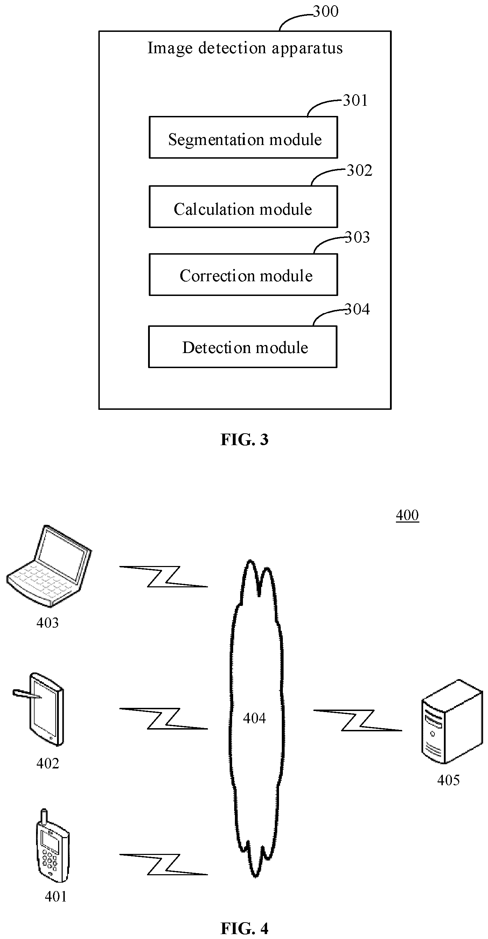

FIG. 3 is a schematic diagram of main modules of an image detection apparatus according to an embodiment of the disclosure. As shown in FIG. 3, the image detection apparatus 300 comprises a segmentation module 301, a calculation module 302, a correction module 303 and a detection module 304; wherein the segmentation module 301 is used for performing instance segmentation on an image to be detected using an image instance segmentation model so as to obtain respective instances in the image to be detected; the calculation module 302 is used for calculating preliminary centers of the respective instances based on point cloud data and the respective instances; the correction module 303 is used for correcting the preliminary centers of the respective instances using an instance center correction model so as to obtain corrected centers of the respective instances; and the detection module 304 is used for inputting the corrected centers of the respective instances into a target detection model so as to output frames and categories of the respective instances.

Optionally, the calculation module 302 is further used for:
projecting the point cloud data to the respective instances;
merging the point cloud data of the same instance appearing in different images to be detected in accordance with the point cloud data of the overlapping parts in the respective instances;
calculating the point cloud data of the main bodies of the respective instances using a clustering algorithm; and
calculating the preliminary centers of the respective instances based on the point cloud data of the main bodies of the respective instances.

Optionally, the calculation module 302 is further used for:
calculating the point cloud data of the main bodies of the respective instances using a spatial clustering algorithm, and removing the point cloud data outside the main bodies of the respective instances.

Optionally, the image detection apparatus 300 further include a training module, the training module is used for:
acquiring sample images at various angles, marking positions, categories and outlines of respective sample instances on the sample images at various angles, and obtaining the image instance segmentation model by training using a first model;
calculating the preliminary centers of the respective sample instances, marking the frames of the respective sample instances in sample point cloud data, and obtaining the instance center correction model by training using a second model; and
obtaining the target detection model by training using a third model.

Optionally, the training module is further used for:
inputting the sample images at various angles and the positions, categories and outlines of the respective sample instances thereof into the first model for training, thereby obtaining the image instance segmentation model by training;
wherein the first model is Mask R-CNN, Hybrid Task Cascade or BlendMaskd.

Optionally, the training module is further used for:
calculating the preliminary centers of the respective sample instances based on the sample point cloud data and the respective sample instances;
marking the frames of the respective sample instances in the sample point cloud data, and calculating the centers of the frames of the respective sample instances; and
inputting the preliminary centers of the respective sample instances and the centers of the frames of the respective sample instances into the second model for training, thereby obtaining the instance center correction model by training.

Optionally, the training module is further used for:
projecting the sample point cloud data to the respective sample instances;
merging the point cloud data of the same sample instance appearing in different sample images in accordance with the point cloud data of the overlapping parts in the respective sample instances;
calculating the point cloud data of the main bodies of the respective sample instances using a clustering algorithm; and
calculating the preliminary centers of the respective sample instances based on the point cloud data of the main bodies of the respective sample instances.

Optionally, the second model is PointNet, PointNet++, Cylider3D or Rand-LA.

Optionally, the training module is further used for:
inputting attribute data of respective point clouds of the respective sample instances and the frames of the respective sample instances into the third model for training, thereby obtaining the target detection model by training;
wherein the attribute data of each point cloud includes three-dimensional coordinates, a category and center coordinates of the frame to which the point cloud belongs.

Optionally, the third model is PointPillars, VoxelNet, Sparsely Embedded Convolutional Detection or CenterPoint.

It should be noted that the specific implementation contents of the image detection apparatus according to the disclosure have been described in detail in the image detection method described above, so the repeated contents will not be described again herein.

FIG. 4 shows an exemplary system architecture 400 to which an image detection method or an image detection apparatus according to an embodiment of the disclosure can be applied.

As shown in FIG. 4, the system architecture 400 may comprise terminal devices 401, 402 and 403, a network 404, and a server 405. The network 404 is a medium for providing a communication link between the terminal devices 401, 402 and 403 and the server 405. The network 404 may include various connection types, such as wired or wireless communication links, or fiber-optic cables.

The user may use the terminal devices 401, 402 and 403 to interact with the server 405 through the network 404 to receive or send messages and so on. Various communication client applications, such as shopping applications, web browser applications, search applications, instant messaging tools, email clients, social platform software, and so on (only examples), may be installed on the terminal devices 401, 402 and 403.

The terminal devices 401, 402 and 403 may be various electronic devices having screens and supporting web browsing, including but not limited to smart phones, tablet computers, laptop portable computers, desktop computers, and so on.

The sever 405 may be a server that provides various services, such as a background management server that provides support for shopping websites browsed by the user using the terminal devices 401, 402 and 403 (only an example). The background management server may process, for example, analyze the received request for querying product information and other data, and feed the processing results back to the terminal devices.

It shall be noted that the image detection method provided by the embodiment of the disclosure is generally performed by the server 405, and correspondingly, the image detection apparatus is generally provided in the server 405. The image detection method provided by the embodiment of the disclosure may also be performed by the terminal devices 401, 402 and 403, and correspondingly, the image detection apparatus may be provided in the terminal devices 401, 402 and 403.

It should be understood that the numbers of the terminal devices, the networks, and the servers in FIG. 4 are merely schematic. According to implementation requirements, there may be any numbers of terminal devices, networks, and servers.

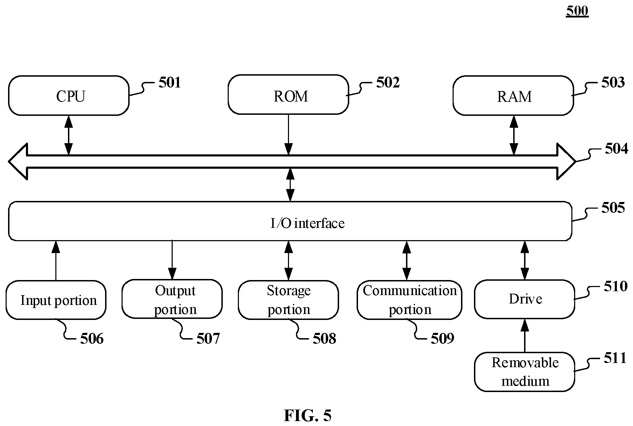

Reference is now made to FIG. 5, which shows a schematic diagram of a structure of a computer system 500 suitable for implementing a terminal device according to an embodiment of the disclosure. The terminal device shown in FIG. 5 is only an example, and shall not impose any limitation on the functions and the scope of use of the embodiment of the disclosure.

As shown in FIG. 5, the computer system 500 includes a central processing unit (CPU) 501, which may perform various appropriate actions and processes according to a program stored in a read-only memory (ROM) 502 or a program loaded from a storage portion 508 into a random access memory (RAM) 503. Various programs and data required for the operation of the system 500 are also stored in the RAM 503. The CPU 501, the ROM 502 and the RAM 503 are connected to each other through a bus 504. An input/output (I/O) interface 505 is also connected to the bus 504.

The following components are connected to the I/O interface 505: an input portion 506 including a keyboard, a mouse, and so on; an output portion 507 including a cathode ray tube (CRT), a liquid crystal display (LCD) and so on, and a speaker and so on; a storage portion 508 including a hard disk and so on; and a communication portion 509 including a network interface card such as a LAN card, a modem, and so on. The communication portion 509 performs communication processing via a network such as the Internet. A drive 510 is also connected to the I/O interface 505 according to requirements. A removable medium 511, such as a magnetic disk, an optical disk, a magneto-optical disk, a semiconductor memory, and so on, is installed on the drive 510 according to requirements so that a computer program read therefrom is installed in the storage portion 508 according to requirements.

In particular, according to the embodiment of the disclosure, the process described above with reference to the flowchart may be implemented as a computer software program. For example, the embodiment of the disclosure includes a computer program product, which includes a computer program carried on a computer-readable medium, the computer program containing a program code for performing the method shown in the flowchart. In such embodiment, the computer program may be downloaded and installed from the network through the communication portion 509, and/or installed from the removable medium 511. When the computer program is executed by the central processing unit (CPU) 501, the aforesaid functions defined in the system according to the disclosure are executed.

It shall be noted that the computer-readable medium shown in the disclosure may be a computer-readable signal medium or a computer-readable storage medium or any combination of the aforesaid two media. The computer-readable storage medium may be, for example, but not limited to, an electronic, magnetic, optical, electromagnetic, infrared, or semiconductor system, apparatus or device, or any combination thereof. More specific examples of the computer-readable storage medium may include, but are not limited to, an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the disclosure, the computer-readable storage medium may be any tangible medium containing or storing a program, and the program may be used by or in combination with an instruction execution system, apparatus or device. In the disclosure, the computer-readable signal medium may include a data signal propagated in a baseband or propagated as a part of a carrier wave, in which a computer-readable program code is carried. Such propagated data signal may adopt many forms, including but not limited to electromagnetic signals, optical signals, or any suitable combination thereof. The computer-readable signal medium may be also any computer-readable medium other than the computer-readable storage medium, and the computer-readable medium may send, propagate, or transmit a program for use by or in connection with the instruction execution system, apparatus or device. The program code contained on the computer-readable medium may be transmitted using any appropriate medium, including but not limited to wireless, wire, optical cable, RF, and so on, or any suitable combination thereof.

The flowcharts and block diagrams in the figures illustrate architectures, functions and operations that may be implemented by systems, methods and computer program products according to various embodiments of the disclosure. In this regard, each block in the flowcharts or block diagrams may represent a module, a program segment, or a part of a code, which contains one or more executable instructions for implementing specified logic functions. It shall be also noted that in some alternative implementations, the functions labeled in the blocks may also occur in an order different from that labeled in the figures. For example, two successively represented blocks may actually be executed substantially in parallel, and they may sometimes be executed in a reverse order, which depends on the functions involved. It shall be also noted that each block in the block diagrams or flowcharts, and combinations of the blocks in the block diagrams or flowcharts may be implemented with a dedicated hardware-based system that performs specified functions or operations, or may be implemented with a combination of dedicated hardware and computer instructions.

The involved modules described in the embodiment of the disclosure may be implemented by software or hardware. The described module may be also provided in a processor. For example, a description may be made as follows: a processor comprising a segmentation module, a calculation module, a correction module and a detection module. The names of these modules do not form limitations of the modules themselves in some cases.

As another aspect, the disclosure also provides a computer-readable medium, which may be included in the devices described in the aforesaid embodiment, or may exist independently without being assembled into the devices. The aforesaid computer-readable medium carries one or more programs, and the one or more programs, when executed by one of the devices, cause the device to implement the following method: performing instance segmentation on an image to be detected using an image instance segmentation model so as to obtain respective instances in the image to be detected; calculating preliminary centers of the respective instances based on point cloud data and the respective instances; correcting the preliminary centers of the respective instances using an instance center correction model so as to obtain corrected centers of the respective instances; and inputting the corrected centers of the respective instances into a target detection model so as to output frames and categories of the respective instances.

According to the technical solution of the embodiment of the disclosure, because of the technical means of performing instance segmentation on an image to be detected using an image instance segmentation model, and correcting the preliminary centers of the respective instances using an instance center correction model to thereby input the corrected centers of the respective instances into a target detection model, the technical problem of a comparatively poor image detection performance in the prior art is overcome. The embodiment of the disclosure uses the instance segmentation result of the image to mark each point in the point cloud at a level of instances, further corrects the center of each instance, and then performs a target detection using a point cloud detection algorithm, and since the instance information of the point cloud is obtained before the point cloud is sent to the point cloud detection algorithm, the learning difficulty of the detection algorithm is greatly reduced, and the detection performance is greatly improved.

The above specific implementation schemes do not form limitations on the scope of protection of the disclosure. It shall be understood by those skilled in the art that various modifications, combinations, sub-combinations and substitutions may occur depending on design requirements and other factors. Any modification, equivalent replacement, improvement, and so on made within the spirit and principle of the disclosure shall be included in the scope of protection of the disclosure.

## Claims

1. An image detection method, the method comprises:
performing instance segmentation on an image to be detected using an image instance segmentation model so as to obtain respective instances in the image to be detected;
calculating preliminary centers of the respective instances based on a point cloud data and the respective instances;
correcting the preliminary centers of the respective instances using an instance center correction model so as to obtain corrected centers of the respective instances; and
inputting the corrected centers of the respective instances into a target detection model so as to output frames and categories of the respective instances.

2. The method of claim 1, wherein calculating preliminary centers of the respective instances based on point cloud data and the respective instances comprises:
projecting the point cloud data to the respective instances;
merging the point cloud data of the same instance appearing in different images to be detected in accordance with the point cloud data of the overlapping parts in the respective instances;
calculating the point cloud data of the main bodies of the respective instances using a clustering algorithm;
calculating the preliminary centers of the respective instances based on the point cloud data of the main bodies of the respective instances.

3. The method of claim 2, wherein calculating the point cloud data of the main bodies of the respective instances using a clustering algorithm comprises: calculating the point cloud data of the main bodies of the respective instances using a spatial clustering algorithm, and removing the point cloud data outside the main bodies of the respective instances.

4. The method of claim 1, wherein before performing instance segmentation on an image to be detected using an image instance segmentation model so as to obtain respective instances in the image to be detected, the method further comprises:
acquiring sample images at various angles, marking positions, categories and outlines of respective sample instances on the sample images at various angles, and obtaining the image instance segmentation model by training using a first model;
calculating the preliminary centers of the respective sample instances,
marking the frames of the respective sample instances in sample point cloud data, and obtaining the instance center correction model by training using a second model;
obtaining the target detection model by training using a third model.

5. The method of claim 4, wherein obtaining the image instance segmentation model by training using a first model comprises:
inputting the sample images at various angles and the positions, categories and outlines of the respective sample instances thereof into the first model for training, thereby obtaining the image instance segmentation model by training;
wherein the first model is Mask R-CNN, Hybrid Task Cascade or BlendMaskd.

6. The method of claim 4, wherein the step for calculating the preliminary centers of the respective sample instances, marking the frames of the respective sample instances in sample point cloud data, and obtaining the instance center correction model by training using a second model comprises:
calculating the preliminary centers of the respective sample instances based on the sample point cloud data and the respective sample instances;
marking the frames of the respective sample instances in the sample point cloud data, and calculating the centers of the frames of the respective sample instances;
inputting the preliminary centers of the respective sample instances and the centers of the frames of the respective sample instances into the second model for training, thereby obtaining the instance center correction model by training.

7. The method of claim 6, wherein the step for calculating the preliminary centers of the respective sample instances based on the sample point cloud data and the respective sample instances comprises:
projecting sample point cloud data to the respective sample instances;
merging the point cloud data of the same sample instance appearing in different sample images in accordance with the point cloud data of the overlapping parts in the respective sample instances;
calculating the point cloud data of the main bodies of the respective sample instances using a clustering algorithm;
calculating the preliminary centers of the respective sample instances based on the point cloud data of the main bodies of the respective sample instances.

8. The method of claim 4, wherein the step for obtaining the target detection model by training using a third model comprises:
inputting attribute data of respective point clouds of the respective sample instances and the frames of the respective sample instances into the third model for training, thereby obtaining the target detection model by training;
wherein the attribute data of each point cloud includes three-dimensional coordinates, a category and center coordinates of the frame to which the point cloud belongs.

9. An image detection apparatus, comprising:
a segmentation module for performing instance segmentation on an image to be detected using an image instance segmentation model so as to obtain respective instances in the image to be detected;
a calculation module for calculating preliminary centers of the respective instances based on point cloud data and the respective instances;
a correction module for correcting the preliminary centers of the respective instances using an instance center correction model so as to obtain corrected centers of the respective instances; and
a detection module for inputting the corrected centers of the respective instances into a target detection model so as to output frames and categories of the respective instances.

10. An electronic device, comprising:
one or more processors;
a storage means for storing one or more programs,
the one or more programs, when executed by the one or more processors, causing the one or more processors to implement the method according to any of claims 1-8.

11. A computer-readable medium, on which a computer program is stored, the program, when executed by a processor, implementing the method according to any of claims 1-8.
